# EUROPEAN PATENT APPLICATION

(11) **EP 4 411 461 A1**
(43) Date of publication of application: **07.08.2024**
(21) Application number: 22875532.8
(22) Date of filing: 01.07.2022
(51) Int. Cl.: G02C 7/10, G02B 5/02, G02C 7/02, G02C 11/02

(54) **SPECTACLE OPTICAL ARTICLE AND METHOD FOR MANUFACTURING SAME**

(30) Priority: 28.09.2021 JP 2021157726
(71) Applicant: Hoya Lens Thailand Ltd., Pathumthani 12130 (TH)
(72) Inventor: ISHIZAKI Takako, Tokyo 160-8347 (JP)
(74) Representative: Hoffmann Eitle
(86) International application number: PCT/JP2022/026451
(87) International publication number: WO 2023/053653

(57) **Abstract**

The present invention provides a spectacle optical article 1 and a technology related thereto, the spectacle optical article comprising an outer surface 10a that is a surface on the object side and an inner surface 10b that is a surface on the eyeball side, and containing glossy particles P with particle diameters of 50 to 150 um between both the surfaces.

## Description

### Technical Field

The present invention relates to a spectacle optical article and a method for manufacturing the same.

### Background Art

Patent Literature 1 describes obtaining a component B of a spectacle lens by vapor deposition of 3D printing ink ([0065], etc.). Patent Literature 1 discloses a metallic glossy pigment or a pearlescent pigment as a pigment that can be contained in 3D printing ink ([0132]).

### Citation List

### Patent Literature

Patent Literature 1: JP 2019-537052 A

### Summary of Invention

### Technical Problem

In recent years, a spectacle optical article such as a spectacle lens, spectacles including the spectacle lens, sunglasses, or goggles has been required to have high decorativeness.

The present inventor has focused on glossy particles as a means for enhancing the decorativeness of the spectacle optical article. When the sizes of the glossy particles are increased, the glossy particles are more easily noticeable, and thus the decorativeness of the optical article is enhanced. However, increasing the sizes of the glossy particles means that the glossy particles are likely to interfere with light passing through the optical article. That is, even if the pigment is used in Patent Literature 1, it is a general idea to decrease the sizes of particles constituting a metallic glossy pigment or a pearlescent pigment so that the particles cannot be visually confirmed.

An object of one embodiment of the present invention is to enhance the decorativeness of a spectacle optical article.

### Solution to Problem

According to a first aspect of the present invention,
a spectacle optical article includes an outer surface that is a surface on an object side and an inner surface that is a surface on an eyeball side, the spectacle optical article containing glossy particles with particle diameters of 50 to 150 µm between the outer surface and the inner surface.

According to a second aspect of the present invention,
the spectacle optical article according to the first aspect further includes a glossy particle-containing layer in which the glossy particles are accommodated in a layer having a thickness 1.5 times a maximum particle diameter of the glossy particles.

According to a third aspect of the present invention,
the spectacle optical article according to the second aspect further includes a cover layer provided to cover the glossy particle-containing layer.

According to a fourth aspect of the present invention,
the spectacle optical article according to any one of the first to third aspects further includes a substrate containing the glossy particles.

According to a fifth aspect of the present invention,
the spectacle optical article according to any one of the first to fourth aspects further includes:
a substrate; and
an antireflection layer provided so as to cover at least one of an outer surface and an inner surface of the substrate.

According to a sixth aspect of the present invention,
the spectacle optical article according to any one of the first to fifth aspects further includes:
a substrate;
a primer layer provided so as to cover at least one of an outer surface and an inner surface of the substrate; and
a main layer provided so as to cover the primer layer, wherein
a glossy particle-containing layer in which the glossy particles are accommodated in a layer having a thickness 1.5 times a maximum particle diameter of the glossy particles includes the glossy particles and at least one of the primer layer and the main layer, and a cover layer provided to cover the glossy particle-containing layer includes the main layer.

According to a seventh aspect of the present invention,
in the spectacle optical article according to the sixth aspect, the main layer includes at least one of a smoothing layer, a photochromic layer, and a hard coat layer.

According to an eighth aspect of the present invention,
in the spectacle optical article according to the sixth or seventh aspect, the main layer has a thickness of 20 to 200 µm.

According to a ninth aspect of the present invention,
in the spectacle optical article according to any one of the first to eighth aspects, the glossy particles are at least one of particles of metal or particles of an oxide of the metal, and particles constituting a pearlescent pigment.

According to a tenth aspect of the present invention,
the spectacle optical article according to any one of the first to ninth aspects is a dyed lens, wherein a mean transmittance of a line-of-sight passing portion is 8% or more.

According to an eleventh aspect of the present invention,
the spectacle optical article according to any one of the first to ninth aspects is a transparent lens, wherein a mean transmittance of a line-of-sight passing portion is 60% or more.

According to a twelfth aspect of the present invention,
the spectacle optical article according to any one of the first to eleventh aspects is a spectacle lens, spectacles including the spectacle lens, sunglasses, or goggles.

According to a thirteenth aspect of the present invention,
in the spectacle optical article according to any one of the first to twelfth aspects, the glossy particles are unevenly distributed between the outer surface and the inner surface of the spectacle optical article and in a peripheral portion when the spectacle optical article is viewed from front.

According to a fourteenth aspect of the present invention,
a method for manufacturing a spectacle optical article including an outer surface which is a surface on an object side and an inner surface which is a surface on an eyeball side, the method including adding glossy particles having particle diameters of 50 to 150 um between the outer surface and the inner surface.

According to a fifteenth aspect of the present invention,
the method for manufacturing a spectacle optical article according to the fourteenth aspect further includes applying a glossy particle-containing liquid so as to cover at least one of an outer surface and an inner surface of a substrate.

According to a sixteenth aspect of the present invention,
the method for manufacturing a spectacle optical article according to the fourteenth or fifteenth aspect further includes:
providing a primer layer on a substrate so as to cover at least one of an outer surface and an inner surface of the substrate;
sprinkling the glossy particles on the primer layer; and
applying a raw material liquid of a main layer so as to cover the glossy particles.

Other aspects that can be combined with the above aspects are listed below.

The spectacle optical article according to one embodiment of the present invention may be roughly divided into a substrate which is a body portion and a film provided to cover the substrate. The substrate may also contain the glossy particles, or only the film may contain the glossy particles.

A quarter-wavelength layer may be provided between the substrate and the primer layer.

The shape of the glossy particles is not limited, but the glossy particles may contain particles having a non-spherical shape (for example, scale-like shape or flaky shape) in order to efficiently reflect light and favorably exhibit glossiness. The content percentage of the non-spherical particles is preferably more than 50 mass%, and more preferably 70 mass% or more.

The glossy particle-containing layer provided on the outer surface (inner surface) may contain 90% or more (preferably 95% or more, more preferably 99% or more) of the glossy particles in the film on the outer surface (inner surface) side.

The number of the glossy particles contained in the cover layer may be 10% or less (preferably 5% or less, more preferably 1% or less) of the glossy particles in the film.

A glossy particle-containing layer in which the glossy particles are accommodated in a layer having a thickness 1.5 times (preferably 1.3 times or 1.2 times) the maximum particle diameter of the glossy particles may be provided.

An antireflection layer may be provided on the outermost surface side of the glossy particle-containing layer provided on the outer surface (and/or the inner surface).

The particle diameters of the glossy particles are preferably 50 to 70 µm.

The lower limit of the thickness of the main layer may be 30 um, and the upper limit may be 70 um. The definition for the thickness of the main layer may be applied to the total thickness of the primer layer and the main layer.

In a case where the spectacle optical article according to one embodiment of the present invention is a dyed lens, the mean transmittance of a line-of-sight passing portion is preferably 8% or more in view of the visibility of a wearer. In a case where the spectacle optical article according to one embodiment of the present invention is a transparent lens, the mean transmittance of the line-of-sight passing portion is preferably 60% or more, more preferably 75% or more.

### Advantageous Effects of Invention

According to one embodiment of the present invention, the decorativeness of a spectacle optical article can be enhanced.

### Brief Description of Drawings

Fig. 1 is a schematic front view of a spectacle lens according to an embodiment of the present invention.
Fig. 2 is a schematic cross-sectional view taken along line A-A in Fig. 1.
Fig. 3 is a schematic cross-sectional view illustrating a method for manufacturing the spectacle lens according to the embodiment of the present invention.
Fig. 4 is a schematic cross-sectional view of <Specific Example 1>.
Fig. 5 is a schematic cross-sectional view of <Specific Example 7>.

### Description of Embodiments

### <Spectacle Optical Article>

One embodiment of the present invention relates to a spectacle optical article having an outer surface that is a surface on the object side and an inner surface that is a surface on the eyeball side, the spectacle optical article containing glossy particles with particle diameters of 50 to 150 µm (preferably, 50 to 70 µm) between both the surfaces.

In the spectacle optical article according to the embodiment of the present invention, the glossy particles are contained between the outer surface and the inner surface which are the outermost surfaces, and the glossy particles are present neither on the outer surface nor on the inner surface. That is, in the spectacle optical article according to the embodiment of the present invention, the glossy particles are present further to the inner side with respect to the outer surface which is the outermost surface and further to the inner side with respect to the inner surface which is another outermost surface.

The "spectacle optical article" in the embodiment of the present invention includes an untreated spectacle lens having a shape conforming to a shape of a spectacle frame and eyewear having a space between an eye and the eyewear when the eyewear is worn on a face. That is, the eyewear in the present specification does not include a contact lens. The eyewear includes eyeglasses including a treated spectacle lens having a shape conforming to the shape of a spectacle frame. The eyewear in the present specification also includes sunglasses or goggles. The present specification will mainly describe a case where the spectacle optical article is an untreated spectacle lens.

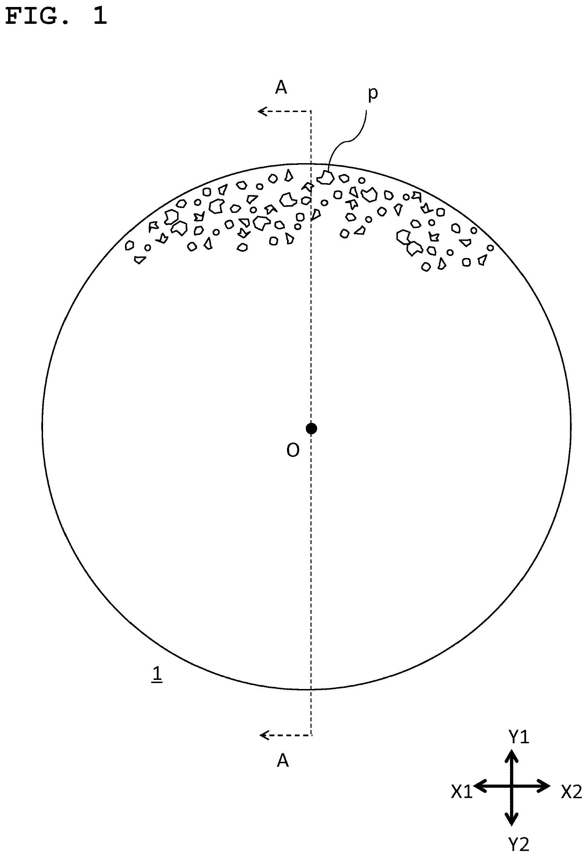

Fig. 1 is a schematic front view of a spectacle lens according to the embodiment of the present invention.

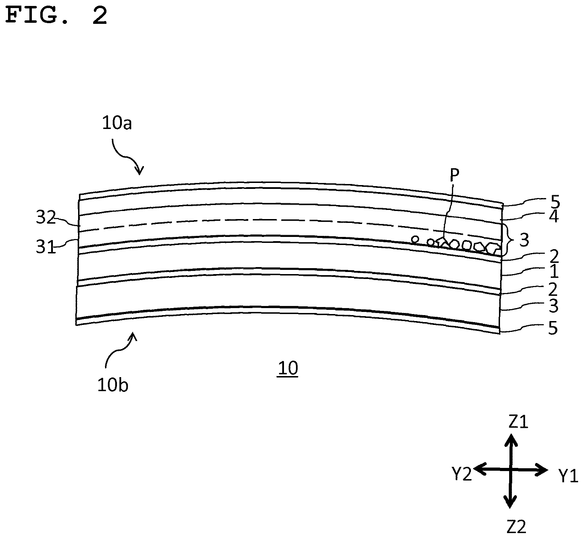

Fig. 2 is a schematic cross-sectional view taken along line A-A in Fig. 1.

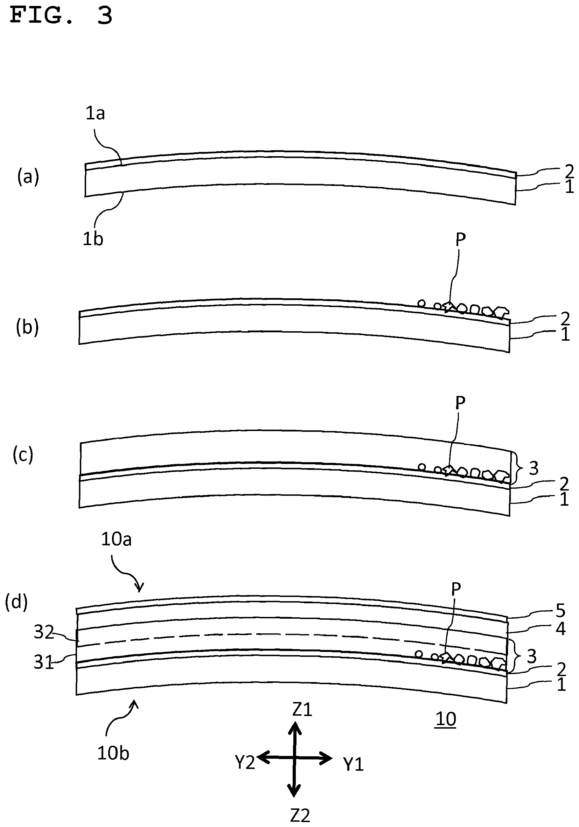

Fig. 3 is a schematic cross-sectional view illustrating a method for manufacturing the spectacle lens according to the embodiment of the present invention.

In a case where the spectacle optical article 10 is a spectacle lens, the spectacle lens can be various lenses such as a single-vision lens, a multifocal lens, and a progressive addition lens. The type of the lens is determined depending on the shapes of both surfaces of a lens substrate. Further, the surface of the lens substrate may be convex, concave, or planar. Typical lens substrate and spectacle lens have a meniscus shape in which the surface on the object side is a convex surface and the surface on the eyeball side is a concave surface. However, the present invention is not limited thereto.

The "glossy particles P" in the embodiment of the present invention refer to particles that exhibit glossiness when a third party other than the wearer of the spectacle optical article 10 sees the spectacle optical article 10. The decorativeness of the spectacle optical article 10 is enhanced due to the glossiness.

A known glossy pigment may be used as a material of the glossy particles P. The glossy pigment may be a metallic pigment, a nonmetallic pigment, or a mixture of the metallic pigment and the nonmetallic pigment. The glossy particles P may be at least one of particles of metal or particles of oxides of the metal, and particles constituting a pearlescent pigment. As the glossy particles P, mica titanium, a glass material such as borosilicic acid or silicic acid, bismuth oxychloride, and the like may be used.

The shape of the glossy particles P is not limited, but the glossy particles P may contain particles having a non-spherical shape (for example, scale-like shape or flaky shape) in order to efficiently reflect light and favorably exhibit glossiness. The content percentage of the non-spherical particles is preferably more than 50 mass%, and more preferably 70 mass% or more.

The particle diameters of the glossy particles P are 50 to 150 µm (preferably 50 to 70 µm). The size of each particle can be determined by observing the particles with a reflection optical microscope at about 100-fold magnification. The "particle size" may be obtained as a length (that is, long diameter) of a longest straight line as a straight line connecting two points on the contour of the particle.

A specific example thereof is as follows. Five particles are randomly extracted, and the arithmetic mean of the long diameters obtained for these particles may be defined as the particle size, that is, the particle diameter of the glossy particles P.

The spectacle optical article 10 according to the embodiment of the present invention is roughly divided into a substrate 1 which is a body portion and a film provided to cover the substrate 1 (for example, Figs. 2 and 3).

The substrate 1 has a substrate outer surface 1a and a substrate inner surface 1b. In the spectacle optical article 10, the film is formed on the substrate outer surface 1a and/or the substrate inner surface 1b. Thus, an outer surface 10a which is a surface on the object side and an inner surface 10b which is a surface on the eyeball side are formed. In a case where the spectacle optical article 10 is spectacles or sunglasses, the spectacle optical article 10 has a temple that is to be put on ears as a member other than the portion where the film is formed.

The spectacle optical article 10 may include the substrate 1 containing the glossy particles P. In this case, the substrate 1 may be produced by pouring a substrate material having the glossy particles P dispersed therein into a mold and curing the substrate material.

An example of a configuration for adding the glossy particles P in the film is as follows. That is, the spectacle optical article 10 may include the substrate 1, a primer layer 2 provided so as to cover at least one of the substrate outer surface 1a and the substrate inner surface 1b, and a main layer 3 provided so as to cover the primer layer 2 (preferably in contact with the primer layer 2) (for example, Figs. 2 and 3). The main layer 3 refers to a main layer with respect to the primer layer 2. The main layer 3 is a layer provided immediately above the primer layer 2 and extending to a region immediately below an antireflection layer 4.

It is preferable that a glossy particle-containing layer 31 in which the glossy particles P are accommodated in a layer having a thickness 1.5 times the maximum particle diameter of the glossy particles P is constituted by at least one of the primer layer 2 and the main layer 3, and a cover layer 32 provided so as to cover the glossy particle-containing layer 31 is constituted by the main layer 3. The primer layer 2 and the main layer 3 are preferably made of resin as a main component (component of maximum mass% in solid content composition, and preferably component of more than 50 mass%) except for the glossy particles P.

The substrate 1 may also contain the glossy particles P, or only the film (for example, a film sandwiched between the substrate 1 and the antireflection layer 4) may contain the glossy particles P. In addition, the glossy particles P may be contained in at least one of the layers constituting the film, or a raw material liquid of each layer and the glossy particles P may be mixed to form the layer. However, in this case, when the thickness of each layer is smaller than the maximum particle diameter of the glossy particles P, there is a high possibility that the glossy particles P are exposed from the layer. Therefore, it is preferable to separately provide another layer in order to prevent the exposure, in other words, in order to remove unevenness (roughness) due to the exposure.

When, for example, the primer layer 2 is formed after a raw material liquid of the primer layer 2 and the glossy particles P are mixed, a smoothing layer 3a or a photochromic layer described later is preferably formed immediately above the primer layer 2 in order to prevent exposure of the glossy particles P. When the photochromic layer is formed after a raw material liquid of the photochromic layer and the glossy particles P are mixed, a hard coat layer 3b is preferably formed immediately above the photochromic layer in order to prevent exposure of the glossy particles P.

When the hard coat layer 3b is formed after a raw material liquid of the hard coat layer 3b and the glossy particles P are mixed, it is preferable to form the hard coat layer 3b sufficiently thicker than the maximum particle diameter of the glossy particles P. On the other hand, when the hard coat layer 3b thinner than the maximum particle diameter of the glossy particles P is formed and the glossy particles P are exposed from the outermost surface of the hard coat layer 3b, the antireflection layer 4 is formed immediately above the hard coat layer 3b, by which the glossy particles P are not exposed. That is, in this case as well, in the spectacle optical article 10, the glossy particles P are present further to the inner side with respect to the outer surface 10a which is the outermost surface and further to the inner side with respect to the inner surface 10b which is another outermost surface.

In the embodiment of the present invention, the primer layer 2 is formed on the substrate 1 in order to improve impact resistance. Note that a quarter-wavelength layer (not illustrated in Figs. 2 and 3) may be provided between the substrate 1 and the primer layer 2.

With regard to the details of the quarter-wavelength layer, an intermediate layer disclosed in JP 2011-113070 A, for example, can be referred to, and paragraphs 0025 to 0033 can be referred to.

With regard to the details of the primer layer 2, paragraphs 0029 and 0030 of JP 2012-128135 A or paragraph 0108 of JP 2009-67845 A can be referred to, for example.

After the raw material of the primer layer 2 is applied to the substrate 1 (Fig. 3(a)), the glossy particles P may be sprinkled onto a predetermined portion before the applied raw material is cured, and then the raw material may be cured (Fig. 3(b)). According to this mode, the glossy particles P can be unevenly distributed between the outer surface 10a and the inner surface 10b of the spectacle optical article 10 and in a peripheral portion when the spectacle optical article 10 that has been worn is viewed from front (for example, Fig. 1). "Being viewed from front" means being viewed in a direction facing a wearer wearing the spectacle optical article 10.

In the embodiment of the present invention, when the spectacle optical article 10 worn is viewed from front, the ear side of the wearer is defined as an X1 direction, the nose side is defined as an X2 direction, the upper side is defined as a Y1 direction, and the lower side is defined as a Y2 direction. A direction perpendicular to the X1-X2 direction and the Y1-Y2 direction is defined as a Z1-Z2 direction. The Z1-Z2 direction may be an optical axis direction. The Z1 direction is the front side as viewed from the wearer, and the Z2 direction is the publication as viewed from the wearer. "Being viewed from front" means that the wearer wearing the spectacle optical article 10 is viewed in the Z2 direction. The "cross-sectional view" is a cross-sectional view in the Z1-Z2 direction (thickness direction of the spectacle optical article 10).

Uneven distribution of the glossy particles P in the peripheral portion means that the glossy particles P are not (substantially) arranged in a line-of-sight passing portion (portion close to the center of the spectacle lens of spectacles) of the spectacle optical article 10. This means that a comfortable field of view can be obtained for the wearer of the spectacle optical article 10. The term "uneven distribution" as used herein means that the glossy particles P are not uniformly distributed over the entire portion of the spectacle optical article 10 in front of the eyes (spectacle lens held by a frame of the spectacles) in front view. "Uneven distribution of the glossy particles P in the peripheral portion" means that the glossy particles P are more densely distributed in the peripheral portion than in the line-of-sight passing portion of the spectacle optical article 10 in front view.

By adopting this mode, it is also possible to set the mean transmittance of the line-of-sight passing portion of the spectacle optical article 10 to a predetermined value or more (specific numerical values will be described later). The "line-of-sight passing portion of the spectacle optical article 10" herein refers to the inside of a circle having a radius of 1 cm from the center (geometric center, optical center, or centration point) of the portion (spectacle lens of the spectacles) of the spectacle optical article 10 in front of the eyes when the portion is viewed from front. Here, the outside of the circle is defined as the peripheral portion.

The glossy particles P may be unevenly distributed in the entire peripheral portion or only in a part of the peripheral portion. In a case where only a part of the peripheral portion is selected, the location where the glossy particles P are unevenly distributed is not limited, but for example, the glossy particles P may be unevenly distributed in an upper part of the peripheral portion in a front view. An example in each drawing of the present application corresponds to this case.

After the applied raw material of the primer layer 2 is cured, the ends of the glossy particles P are buried in the primer layer 2, and the outermost surface is uneven (rough) because a large number of the glossy particles P are present on the outermost surface. The main layer 3 may be provided so as to cover the glossy particles P (Fig. 3(c)).

The main layer 3 is a layer provided so as to cover the primer layer 2 as an underlayer, and is also a functional layer exhibiting a function of increasing strength and in some cases, a photochromic function. The main layer 3 includes the glossy particle-containing layer 31 provided so as to cover the primer layer 2 and the cover layer 32 provided so as to cover the glossy particle-containing layer 31. As an example, the main layer 3 includes the glossy particle-containing layer 31 and the cover layer 32.

The main layer 3 may remove unevenness (roughness) of the primer layer 2 to smooth the primer layer 2. The material of the main layer 3 is not limited, but the main layer 3 may include at least one of the smoothing layer 3a (or the photochromic layer) and the hard coat layer 3b, or may include at least the hard coat layer 3b.

With regard to the details of the photochromic layer, Example 1 of JP 2013-114162 A can be referred to, for example. The photochromic layer is a layer provided on the substrate 1 for providing photochromic properties in the portion of the spectacle optical article 10 in front of the eyes. A material for a known photochromic layer may be used as a material of the photochromic layer. For example, an organic photochromic dye may be contained in the photochromic layer. It is also possible to use the reversible action of the organic photochromic dye of developing color in response to light including ultraviolet rays such as sunlight in bright outdoors and returning to the original color (colorless state) to recover high transmittance when the organic photochromic dye is moved into a room in the absence of ultraviolet rays, for example. This action is called photochromic properties. Further, due to such photochromic properties, glare of sunlight can be reduced.

With regard to the details of the hard coat layer 3b, paragraphs 0025, 0026, and 0030 of JP 2012-128135 A or Examples of JP 2019-82631 A can be referred to, for example. The material of the hard coat layer 3b is not particularly limited, but an organosilicon compound may be used for a hard coat liquid. The organosilicon compound is not particularly limited, and for example, epoxy-based, acryl-based, vinyl-based, and methacryl-based silane coupling agents and the like can be used.

Alternatively, the main layer 3 may include a plurality of layers as described in <Specific Example 1> below. For example, when the ends of the glossy particles P are buried in the primer layer 2 and the outermost surface is uneven (rough) due to the glossy particles P, the photochromic layer may be provided or a layer having no photochromic function may be provided as the smoothing layer 3a to remove the unevenness (roughness). Then, the hard coat layer 3b may be provided so as to cover the photochromic layer or the smoothing layer 3a. The raw material of the smoothing layer 3a is not limited, and may be the same as the raw material (hard coat liquid) of the hard coat layer 3b, or a material in which an organic photochromic dye and a substance related thereto are not mixed in the photochromic layer as described in <Specific Example 1> and the like below may be used. The raw material liquid of the main layer 3 may include a plurality of kinds of chemical agents prepared separately. Examples of the chemical agents include the raw material of the photochromic layer, the hard coat liquid, and the raw material of the smoothing layer 3a. In the following, the raw material of the photochromic layer or the hard coat liquid will be used as the chemical agents as an example.

According to the above example, the primer layer 2, the glossy particle-containing layer 31 in which the glossy particles P are present, and the cover layer 32 which does not have the glossy particles P and is formed of the raw material liquid of the main layer 3 are arranged in this order from the substrate 1 side toward the outermost surface.

Here, the layer in which the glossy particles P are present is referred to as glossy particle-containing layer 31. The glossy particle-containing layer 31 includes the glossy particles P and the raw material liquid of the main layer 3. Then, the cover layer 32 is provided so as to cover the glossy particle-containing layer 31. The cover layer 32 can (substantially) include only the raw material liquid of the main layer 3.

Naturally, the glossy particles P can migrate to the outermost surface side when the raw material liquid of the main layer 3 is cured, but the migration amount is very small. For example, the glossy particle-containing layer 31 provided on the outer surface side 10a (inner surface side 10b) contains 90% or more (preferably 95% or more, more preferably 99% or more) of the glossy particles P in the film on the outer surface side 10a (inner surface side 10b). The glossy particle-containing layer 31 in this state is also referred to as "glossy particle-containing layer 31 filled with the glossy particles P" (Fig. 3(d)). The number of the glossy particles P contained in the cover layer 32 is 10% or less (preferably 5% or less, more preferably 1% or less) of the glossy particles P in the film.

The glossy particle-containing layer 31 filled with the glossy particles P may be provided in a layer having a thickness 1.5 times (preferably 1.3 times or 1.2 times) the maximum particle diameter of the glossy particles P. That is, in one embodiment of the present invention, when the spectacle optical article 10 is viewed in cross section, the glossy particles P are present within the spectacle optical article 10 in a state of being substantially aligned in a horizontal line along the surface shape of the substrate outer surface 1a and/or the substrate inner surface 1b on the side where the glossy particle-containing layer 31 is provided. The glossy particle-containing layer 31 is covered with the cover layer 32 (substantially) including only the raw material liquid of the main layer 3.

In a case where the glossy particles P are unevenly distributed in the peripheral portion when the spectacle optical article 10 is viewed from front, there are (almost) no glossy particles P in the line-of-sight passing portion of the glossy particle-containing layer 31. Therefore, the line-of-sight passing portion of the glossy particle-containing layer 31 is integrated with the cover layer 32 (therefore, in each drawing of the present application, the boundary between the glossy particle-containing layer 31 and the cover layer 32 is indicated by a long dashed line). In this case, a layer having a thickness 1.5 times (preferably 1.3 times, more preferably 1.2 times) the maximum particle diameter of the glossy particles P is also referred to as glossy particle-containing layer 31 filled with the glossy particles P. In the glossy particle-containing layer 31, the glossy particles P are preferably unevenly distributed in the peripheral portion in a front view.

As one specific mode of the glossy particle-containing layer 31, for example, a layer having a thickness 1.5 times (preferably 1.3 times or 1.2 times) the maximum particle diameter of the glossy particles P in a cross-sectional view and disposed at a position where the glossy particles P are contained most in the layer may be specified as the glossy particle-containing layer 31. When the ends of the glossy particles P are buried in the primer layer 2, the glossy particle-containing layer 31 includes the outermost surface side of the primer layer 2 and includes the smoothing layer 3a, a photochromic layer, or the hard coat layer 3b that removes unevenness (roughness) caused by the glossy particles P.

A layer (that is, a layer that does not (substantially) contain the glossy particles P and is closer to the substrate 1 with respect to the antireflection layer 4 and a protective layer 5 provided on the outermost surface side) that is provided so as to cover the glossy particle-containing layer 31 and (substantially) includes only the raw material liquid of the main layer 3 may be specified as the cover layer 32. The cover layer 32 may include only the hard coat layer 3b, may include the hard coat layer 3b and the smoothing layer 3a (or the photochromic layer), or may include the smoothing layer 3a (or the photochromic layer).

The thickness of the main layer 3 may be 20 to 200 um. The lower limit may be 30 µm. The upper limit may be 70 um. The definition of the numerical range described in this paragraph may be applied to the total thickness of the primer layer 2 and the main layer 3.

The glossy particle-containing layer 31 is present on the outer surface side 10a and/or the inner surface side 10b, but the glossy particle-containing layer 31 may be present only on at least the outer surface side 10a or the outer surface 10a in consideration of enhancing decorativeness and making it more noticeable to a third party. Each drawing of the present application illustrates a case where the glossy particle-containing layer 31 is present only on the outer surface side 10a.

The spectacle optical article 10 according to the embodiment of the present invention may include the substrate 1 and the antireflection layer 4 provided so as to cover at least one of the substrate outer surface 1a and the substrate inner surface 1b. That is, the spectacle optical article 10 may include the antireflection layer 4 on the outermost surface side with the glossy particles P contained therein as viewed from the glossy particles P. As a specific example, the antireflection layer 4 may be provided on the outermost surface side of the glossy particle-containing layer 31 provided on the substrate outer surface 1a (and/or the substrate inner surface 1b). For example, the antireflection layer 4 may be provided in contact with the hard coat layer 3b (main layer 3). Then, the protective layer 5 for protecting the antireflection layer 4 and the like may be disposed on the outermost surfaces on the outer surface side 10a and the inner surface side 10b (Fig. 2 and Fig. 3(d) which illustrates the protective layer 5 only on the outer surface side 10a for convenience of description).

In a case where the spectacle optical article 10 is a spectacle lens, the substrate 1 (lens substrate) of the spectacle lens is not particularly limited, and examples thereof include glass, a styrene resin including a (meth)acrylic resin, a polycarbonate resin, an allyl resin, an allyl carbonate resin such as diethyleneglycol bis(allylcarbonate) resin (CR-39), a vinyl resin, a polyester resin, a polyether resin, a urethane resin obtained through reaction between an isocyanate compound and a hydroxy compound such as diethylene glycol, a thiourethane resin obtained through reaction between an isocyanate compound and a polythiol compound, and a transparent resin obtained by curing a polymerizable composition containing a (thio) epoxy compound having one or more intermolecular disulfide bonds. Furthermore, inorganic glass may be used.

Note that the lens substrate may be undyed (a colorless lens) or dyed (a dyed lens). The refractive index of the lens substrate is, for example, approximately 1.60 to 1.75. However, the refractive index of the lens substrate is not limited thereto, and may be within the above range, or over or under the above range.

The mean transmittance of the line-of-sight passing portion of the spectacle optical article 10 containing the glossy particles P may be defined separately for the case where the spectacle optical article 10 is the above-described dyed lens and the case where the spectacle optical article is not the above-described dyed lens (that is, the case where the spectacle optical article is a transparent lens that is not dyed). The "transmittance" in the present specification is a value obtained using spectrophotometer UH 4150 manufactured by Hitachi Ltd.

In a case where the spectacle optical article 10 according to the embodiment of the present invention is a dyed lens, the mean transmittance of the line-of-sight passing portion is preferably 8% or more in view of the visibility of the wearer. In a case where the spectacle optical article 10 according to the embodiment of the present invention is a transparent lens, the mean transmittance of the line-of-sight passing portion is preferably 60% or more, more preferably 75% or more.

A combination of the lens including the photochromic layer and the dyed lens may be used as the spectacle optical article 10 according to the embodiment of the present invention. Examples of the spectacle optical article 10 described above include a spectacle lens that is subjected to gradient dyeing. The gradient dyeing is a dyeing method for changing the density of dyeing between an upper half and a lower half of a spectacle lens by dyeing only the upper half without dyeing the lower half.

The glossy particles P themselves according to the embodiment of the present invention may be colored. The colored glossy particles P and the dyed lens may be combined.

### <Method for Manufacturing Spectacle Optical Article 10>

One embodiment of the present invention provides a method for manufacturing the spectacle optical article 10 including the outer surface 10a which is a surface on the object side and the inner surface 10b which is a surface on the eyeball side. The contents described in <Spectacle Optical Article 10> will be omitted below.

One embodiment of the present invention provides a method for manufacturing the spectacle optical article 10 including the outer surface 10a which is a surface on the object side and the inner surface 10b which is a surface on the eyeball side, the method including adding glossy particles P having particle diameters of 50 to 150 um between both the surfaces.

Preferably, the method includes applying a glossy particle-containing liquid so as to cover at least one of the substrate outer surface 1a and the substrate inner surface 1b. The glossy particle-containing liquid may be applied to the substrate 1 or to another layer provided immediately above the substrate 1. The glossy particle-containing liquid is not limited, and may be a raw material liquid of the main layer 3, or may be a raw material liquid of the photochromic layer or a raw material liquid (hard coat liquid) of the hard coat layer 3b. Naturally, the substrate 1 may be produced by pouring a substrate material having the glossy particles P dispersed therein into a mold and curing the substrate material.

Examples of modes other than the mode of applying the glossy particle-containing liquid include the following.

The method preferably includes:
providing the primer layer 2 on the substrate 1 so as to cover at least one of the substrate outer surface 1a and the substrate inner surface 1b;
sprinkling the glossy particles P on the primer layer 2; and
applying the raw material liquid of the main layer 3 so as to cover the glossy particles P. By sprinkling the glossy particles P, the glossy particles P can be unevenly distributed on the peripheral portion when the spectacle optical article 10 worn is viewed from front.

A technical scope of the present invention is not limited to the aforementioned embodiments but may include various modifications or improvements as long as the specific effects obtained by the elements of the present invention or a combination thereof can be derived.

Specific examples of the spectacle optical article 10 according to the embodiment of the present invention will be described below. In the following specific examples, the spectacle lens 10 is manufactured as an example of the spectacle optical article 10. The present invention is not limited to the following specific examples.

In the following specific examples, details of each material are as follows. The antireflection layer 4 and the protective layer 5 are not provided.
- Diameter of substrate 1 in plan view: 60.00 mm
- Shape of substrate 1: both surfaces are planar (plano)
- Type of substrate 1: polycarbonate (PC)
- Refractive index of substrate 1: 1.589
- Raw material liquid of primer layer 2: produced as follows

50 parts by mass of NMP as a solvent was added to 20 parts by mass of liquid A (OPTOLAKE manufactured by JGC Catalysts and Chemicals Ltd.). Then, 30 parts by mass of liquid B (ADEKA BONTIGHTER (registered trademark) HUX 232 manufactured by ADEKA Corporation) was added dropwise, and the mixture was stirred for 1 hour to obtain 100 parts by mass of a preparation as a whole. A surfactant was added to the preparation, and the mixture was stirred for 24 hours. The obtained solution was filtered through a 0.5 um filter to prepare a primer composition (for details, see Examples in JP 2009-67845 A).

### •Raw material liquid of smoothing layer 3a: produced as follows

A radically polymerizable composition containing 20 parts by mass of trimethylolpropane trimethacrylate, 35 parts by mass of a BPE oligomer (2,2-bis(4-methacryloyloxypolyethoxy, cyphenyl)propane), 10 parts by mass of EB6A (polyester oligomer hexaacrylate), 10 parts by mass of polyethylene glycol diacrylate having an average molecular weight of 532, and 10 parts by mass of glycidyl methacrylate was prepared in a plastic container.

5 parts by mass of a hindered phenol antioxidant (Irgacure 245 manufactured by BASF SE) and 0.6 parts by mass of CGI-1870 (manufactured by BASF SE) as an ultraviolet polymerization initiator were added to 100 parts by mass of the radically polymerizable composition, and the resultant composition was sufficiently stirred and mixed. Then, 6 parts by mass of γ-methacryloyloxypropyltrimethoxysilane (KBM 503 manufactured by Shin-Etsu Chemical Co., Ltd.) was added dropwise to the composition while stirring (see Examples in JP 2013-114162 A for details).

### •Raw material liquid of photochromic layer: produced as follows

The raw material liquid of the photochromic layer was produced in the same manner as in the raw material liquid of the smoothing layer 3a except that 3 parts by mass of chromene 1 (see [Chemical Formula 1] in JP 2013-114162 A) as a photochromic dye and 5 parts by mass of a light stabilizer LS 765 (bis(1,2,2,6,6-pentamethyl-4 piperidyl)sebacate + methyl (1,2,2,6,6-pentamethyl-4 piperidyl) sebacate) were further added to 100 parts by mass of the radically polymerizable composition in the raw material liquid for the smoothing layer 3a, and the resultant was sufficiently stirred and mixed (see Examples in JP 2013-114162 A for details).

### •Raw material liquid of hard coat layer 3b: produced as follows

COMPOCERAN SQ series (manufactured by Arakawa Chemical Industries, Ltd.), propylene glycol monomethyl ether acetate, methanol, CPI-210S (manufactured by San-Apro Ltd.), and Y-7006 (manufactured by Dow Corning Toray Co., Ltd.) were mixed, and the solid content concentration was set to 60% to produce a raw material liquid of the hard coat layer 3b (see Examples in JP 2019-82631 A for details) .

### •Glossy particles P: Iriodin 100 Silver Pearl (with particle diameter of 10 to 60 µm) manufactured by Merck Performance Materials Ltd.

### •Formation surface of each layer: substrate outer surface 1a

### <Specific Example 1>

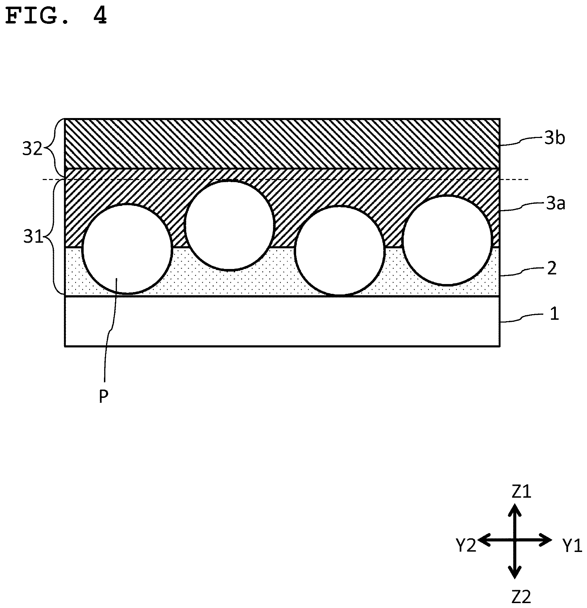

Fig. 4 is a schematic cross-sectional view of <Specific Example 1>.

A raw material liquid of the primer layer 2 and the glossy particles P were mixed to form the primer layer 2 on the substrate outer surface 1a. The film thickness of the primer layer 2 was smaller than the maximum particle diameter of the glossy particles P. Therefore, the glossy particles P were exposed from the outermost surface of the primer layer 2. The smoothing layer 3a having a thickness of 30 µm was provided by applying a raw material of the smoothing layer 3a on the outermost surface side of the primer layer 2 to bury the exposed glossy particles P. A raw material liquid of the hard coat layer 3b was applied to the smoothing layer 3a to provide the hard coat layer 3b. In this example, the glossy particle-containing layer 31 includes the glossy particles P, the primer layer 2, and the smoothing layer 3a, and the cover layer 32 includes the smoothing layer 3a and the hard coat layer 3b.

### <Specific Example 2>

A photochromic layer was formed instead of the smoothing layer 3a in <Specific Example 1>. A manner similar to the manner of <Specific Example 1> was applied except for the above process. In this example, the glossy particle-containing layer 31 includes the glossy particles P, the primer layer 2, and the photochromic layer, and the cover layer 32 includes the photochromic layer and the hard coat layer 3b.

### <Specific Example 3>

In <Specific Example 1>, the hard coat layer 3b was formed by applying a raw material of the hard coat layer 3b on the outermost surface side of the primer layer 2 without providing the smoothing layer 3a to bury the exposed glossy particles P. A manner similar to the manner of <Specific Example 1> was applied except for the above process. In this example, the glossy particle-containing layer 31 includes the glossy particles P, the primer layer 2, and the hard coat layer 3b, and the cover layer 32 includes the hard coat layer 3b.

### <Specific Example 4>

A raw material liquid of the primer layer 2 was applied to form the primer layer 2 on the substrate outer surface 1a. Then, the glossy particles P were sprinkled on the primer layer 2. Thereafter, the smoothing layer 3a having a thickness of 30 um was provided by applying a raw material of the smoothing layer 3a on the outermost surface side of the primer layer 2 which contains the glossy particles P to bury the exposed glossy particles P. A raw material liquid of the hard coat layer 3b was applied to the smoothing layer 3a to provide the hard coat layer 3b. In this example, the glossy particle-containing layer 31 includes the primer layer 2 and the smoothing layer 3a, and the cover layer 32 includes the smoothing layer 3a and the hard coat layer 3b.

### <Specific Example 5>

A photochromic layer was formed instead of the smoothing layer 3a in <Specific Example 4>. A manner similar to the manner of <Specific Example 4> was applied except for the above process. In this example, the glossy particle-containing layer 31 includes the glossy particles P, the primer layer 2, and the photochromic layer, and the cover layer 32 includes the photochromic layer and the hard coat layer 3b.

### <Specific Example 6>

In <Specific Example 4>, the hard coat layer 3b was formed by applying a raw material of the hard coat layer 3b on the outermost surface side of the primer layer 2 without providing the smoothing layer 3a to bury the exposed glossy particles P. A manner similar to the manner of <Specific Example 4> was applied except for the above process. In this example, the glossy particle-containing layer 31 includes the glossy particles P, the primer layer 2, and the hard coat layer 3b, and the cover layer 32 includes the hard coat layer 3b.

### <Specific Example 7>

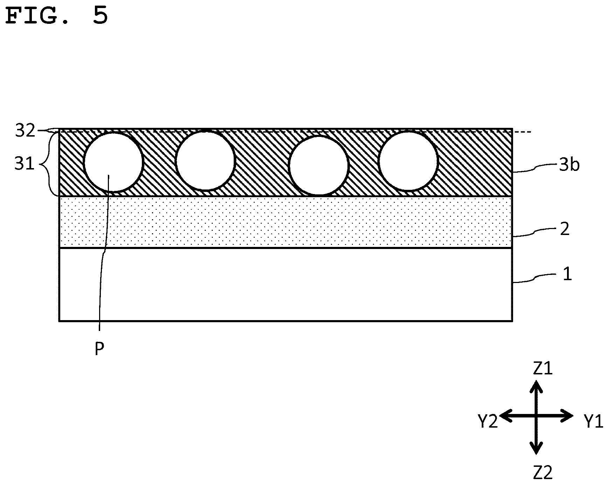

Fig. 5 is a schematic cross-sectional view of <Specific Example 7>.

A raw material liquid of the primer layer 2 was applied to form the primer layer 2 on the substrate outer surface 1a. Then, a raw material liquid of the hard coat layer 3b and the glossy particles P were mixed to form the hard coat layer 3b on the primer layer 2. The thickness of the hard coat layer 3b was larger than the maximum particle diameter of the glossy particles P (thickness ≤ 1.2 × maximum particle diameter). Therefore, the glossy particles P were not exposed from the outermost surface side of the hard coat layer 3b. In this example, the glossy particle-containing layer 31 includes the glossy particles P and the hard coat layer 3b, and the cover layer 32 is defined by the outermost surface of the hard coat layer 3b. Even if the glossy particles P are exposed from the outermost surface side of the hard coat layer 3b, the antireflection layer 4 (and the protective layer 5) may be provided to bury the glossy particles P.

### <Specific Example 8>

A raw material liquid of the primer layer 2 was applied to form the primer layer 2 on the substrate outer surface 1a. Then, a raw material liquid of the smoothing layer 3a and the glossy particles P were mixed to form the smoothing layer 3a on the primer layer 2. In this example, the primer layer 2 is already smooth, and thus, the significance of smoothing is low, but for convenience of description, the layer is referred to as smoothing layer 3a. A raw material liquid of the hard coat layer 3b was applied to the smoothing layer 3a to provide the hard coat layer 3b. In this example, the glossy particle-containing layer 31 includes the glossy particles P and at least the smoothing layer 3a, and the cover layer 32 includes at least the hard coat layer 3b.

### <Specific Example 9>

A photochromic layer was formed instead of the smoothing layer 3a in <Specific Example 8>. A manner similar to the manner of <Specific Example 8> was applied except for the above process. In this example, the glossy particle-containing layer 31 includes the glossy particles P and at least the photochromic layer, and the cover layer 32 includes at least the hard coat layer 3b.

When the smoothing layer 3a or the photochromic layer is used, the glossy particles P can be buried with a plurality of layers as in this example, even when the particle diameter of the glossy particles P is large. On the other hand, when the particle diameters of the glossy particles P are small and the hard coat layer 3b is formed by mixing the raw material liquid of the hard coat layer 3b and the glossy particles P, the hard coat layer 3b is originally formed to have a sufficient thickness, and thus, the glossy particles P are easily accommodated in the hard coat layer 3b (exposure of the glossy particles P can be suppressed).

### Reference Signs List

- 10: Spectacle optical article (spectacle lens)
- 10a: Outer surface (side)
- 10b: Inner surface (side)
- 1: Substrate
- 1a: Substrate outer surface
- 1b: Substrate inner surface
- 2: Primer layer
- 3: Main layer
- 31: Glossy particle-containing layer
- 32: Cover layer
- 3a: Smoothing layer
- 3b: Hard coat layer
- 4: Antireflection layer
- 5: Protective layer
- P: Glossy particle

## Claims

1. A spectacle optical article comprising an outer surface that is a surface on an object side and an inner surface that is a surface on an eyeball side, the spectacle optical article containing glossy particles with particle diameters of 50 to 150 µm between the outer surface and the inner surface.

2. The spectacle optical article according to claim 1, further comprising a glossy particle-containing layer in which the glossy particles are accommodated in a layer having a thickness 1.5 times a maximum particle diameter of the glossy particles.

3. The spectacle optical article according to claim 2, further comprising a cover layer provided to cover the glossy particle-containing layer.

4. The spectacle optical article according to any one of claims 1 to 3, further comprising a substrate containing the glossy particles.

5. The spectacle optical article according to any one of claims 1 to 4, further comprising:
a substrate; and
an antireflection layer provided so as to cover at least one of an outer surface and an inner surface of the substrate.

6. The spectacle optical article according to any one of claims 1 to 5, further comprising:
a substrate;
a primer layer provided so as to cover at least one of an outer surface and an inner surface of the substrate; and
a main layer provided so as to cover the primer layer, wherein
a glossy particle-containing layer in which the glossy particles are accommodated in a layer having a thickness of 1.5 times a maximum particle diameter of the glossy particles includes the glossy particles and at least one of the primer layer and the main layer, and a cover layer provided to cover the glossy particle-containing layer includes the main layer.

7. The spectacle optical article according to claim 6, wherein the main layer includes at least one of a smoothing layer, a photochromic layer, and a hard coat layer.

8. The spectacle optical article according to claim 6 or 7, wherein the main layer has a thickness of 20 to 200 µm.

9. The spectacle optical article according to any one of claims 1 to 8, wherein the glossy particles are at least one of particles of metal or particles of an oxide of the metal, and particles constituting a pearlescent pigment.

10. The spectacle optical article according to any one of claims 1 to 9, the spectacle optical article being a dyed lens, wherein a mean transmittance of a line-of-sight passing portion is 8% or more.

11. The spectacle optical article according to any one of claims 1 to 9, the spectacle optical article being a transparent lens, wherein a mean transmittance of a line-of-sight passing portion is 60% or more.

12. The spectacle optical article according to any one of claims 1 to 11, the spectacle optical article being a spectacle lens, spectacles including the spectacle lens, sunglasses, or goggles.

13. The spectacle optical article according to any one of claims 1 to 12, wherein the glossy particles are unevenly distributed between the outer surface and the inner surface of the spectacle optical article and in a peripheral portion when the spectacle optical article is viewed from front.

14. A method for manufacturing a spectacle optical article including an outer surface which is a surface on an object side and an inner surface which is a surface on an eyeball side, the method comprising adding glossy particles having particle diameters of 50 to 150 um between the outer surface and the inner surface.

15. The method for manufacturing a spectacle optical article according to claim 14, the method further comprising applying a glossy particle-containing liquid so as to cover at least one of an outer surface and an inner surface of a substrate.

16. The method for manufacturing a spectacle optical article according to claim 14 or 15, the method further comprising:
providing a primer layer on a substrate so as to cover at least one of an outer surface and an inner surface of the substrate;
sprinkling the glossy particles on the primer layer; and
applying a raw material liquid of a main layer so as to cover the glossy particles.
